# EUROPEAN PATENT APPLICATION

(11) **EP 1 493 784 A1**
(43) Date of publication of application: **05.01.2005**
(21) Application number: 04015538.4
(22) Date of filing: 01.07.2004
(51) Int. Cl.: C09D 11/00

(54) **Ink jet ink and recording process**

(30) Priority: 02.07.2003 GB 0315434; 09.03.2004 GB 0405215
(71) Applicant: Ilford Imaging UK Limited, Knutsford, Cheshire WA16 7JL (GB)
(72) Inventor: Gould, Jayne Maura, Lymm, Cheshire WA 13 0DS (GB); Rose, Peter Edward, Winsford, Cheshire CW7 3EA (GB); Walker, Nicholas Alexander, Congleton, Cheshire CW12 4EZ (GB)

(57) **Abstract**

There is provided an ink jet ink composition which comprises:-
(a) at least one pigment;
(b) at least one water-miscible organic solvent;
(c) at least one emulsion resin;
(d) at least one solution resin; and
(e) an aqueous carrier medium;
wherein the water-miscible organic solvent is 1,3-propane diol.

Preferably the ink jet ink also comprises a dispersant for the pigment and a surfactant. There is also provided an ink jet printing process using the ink of the invention in a piezo drop-on-demand ink jet printer to print on a poly vinyl chloride printable medium and drying the print using infra-red radiation.

## Description

### Field of the Invention

This invention relates to improved inks for ink jet printers, and in particular to an ink jet ink and method for printing on hydrophobic polymeric substrates.

### Background of the Invention

Ink jet printing is a non-impact method that in response to a digital signal produces droplets of ink that are deposited on a substrate such as paper or transparent film. Ink jet printers have found broad application as output for personal computers in the office and the home, primarily due to its relatively low cost, speed and quiet operation. There are several classes of ink jet printer, for instance thermal drop-on-demand printers, piezo drop-on-demand printers, and continuous ink jet printers.

In recent years the ready availability of ink jet printing systems means that there has been increased interest in using such systems as an alternative to traditional analogue printing methods. In particular, there is interest in employing ink jet printing methods in large and very large format applications for uses such as banners, signage, displays, posters and billboards, and the like.

The use of ink jet printing brings important advantages in such applications, in particular the ease and cheapness of setting up small production runs when compared with conventional printing methods. Yet, there are also disadvantages. For example, the types of final products produced for these applications may be far more exposed to the elements in outdoor usage and to handling, and thus need to be far more lightfast, waterfast, and abrasion resistant than typically required for office or home printing applications. Further, there is particular interest in printing on vinyl (PVC) and other hydrophobic, durable substrates that are commonly used in large format printing applications, but the aqueous inks generally preferred in ink jet do not print well (or at all) on such substrates, either because the ink does not adequately wet the substrate during printing resulting in a poor quality print, or because the ink does not adhere well and is insufficiently robust to handling damage.

Thus, it is normally required either that such substrates be pre-treated to improve adhesion and wetting of the ink when printed, such as by corona discharge as disclosed in United States Patent 5,780,118; that such substrates be coated with an ink-receiving coating or coatings in order to accept an aqueous ink; or that non-aqueous inks are used. Non-aqueous inks are disliked for well-known environmental reasons, whereas pre-treatment or coating of the substrate adds considerably to the cost. Consequently there is considerable interest in developing a system to allow printing with aqueous ink jet inks onto untreated hydrophobic substrates such as vinyl whereby robust lightfast images may easily be produced.

There is particular interest in developing such a system using a piezo drop-on-demand ink jet printing method, as such ink jet printers are more common in a number of large format printing applications.

European Patent Application 0 882 770 A discloses a surfactant system for ink jet inks for printing on hydrophobic surfaces wherein the ink comprises an aqueous carrier medium; a colorant; and a mixture of at least one siloxane surfactant; and at least one fluorinated surfactant and exhibits excellent wetting on hydrophobic surfaces.

Further, United States Patent 6,087,416 discloses aqueous pigmented ink jet inks for printing on vinyl substrates in which the ink comprises an aqueous vehicle containing at least water and a water-miscible glycol or glycol ether, wherein water constitutes no more than 80% by weight based on the total weight of the vehicle; an insoluble colorant (preferably a pigment); a polymeric dispersant; a silicon or fluorinated surfactant; and, optionally but preferably, a graft copolymer binder having a hydrophobic backbone and non-ionic, hydrophilic side chains, which binder is soluble in the aqueous vehicle but insoluble in water.

However there is interest in using inks with a lower content of organic cosolvent and in avoiding or reducing use of the specialist silicon and fluorinated surfactants.

Furthermore, it is also known that vigorous drying conditions are useful for improving printing and image quality on hydrophobic substrates. In particular United States Patents 6,425,663 and 6,508,550 disclose microwave drying methods for use with ink jet printers.

We have developed ink formulations and a printing method particularly useful for piezo drop-on-demand ink jet printers which is capable of providing durable, waterfast, lightfast images directly on vinyl substrates without any need for pre-treatment or coating of the substrate.

### Summary of the Invention

According to this invention there is provided an ink jet ink composition comprising:
(a) at least one pigment;
(b) at least one water-miscible organic solvent;
(c) at least one emulsion resin;
(d) at least one solution resin; and
(e) an aqueous carrier medium;
wherein the water-miscible organic solvent is 1,3-propane diol.

The term pigment describes a colorant which is essentially insoluble in the aqueous ink medium. Many pigments are listed in the Pigments and Solvent Dyes section of the Colour Index International, published by the Society of Dyers and Colourists in 1997. Suitable pigments for the invention include those classified by the Colour Index as C.I. Pigment Black 1; C.I. Pigment Black 7; C.I. Pigment Yellow 1, 3, 12, 13, 14, 17, 24, 55, 74, 81, 83, 87, 95, 97, 98, 100, 101, 104, 108, 109, 110, 117, 120, 138, 151, 154, 155, 180, and 213; C.I. Pigment Orange 5, 13, 16, 17, 36, 43, 51, 71, and 73; C.I. Pigment Red 1, 2, 3, 9, 17, 22, 23, 31, 38, 48:1, 48:2, 48:3, 48:4, 49:1, 52:2, 53:1, 57:1, 60:1, 63:1, 63:2, 64:1, 81, 83, 88, 112, 114, 122, 123, 146, 149, 166, 168, 170, 175, 176, 178, 179, 184, 185, 188, 190, 202, 207, 209, and 222; C.I. Pigment Violet 1, 3, 5:1, 19, 23, 35, and 37; C.I. Pigment Blue 1, 2, 15:1, 15:2, 15:3, 15:4, 15:6, 16, 56, 60, 76, 79, and 80; and C.I. Pigment Green 1, 4, 7, 8, 10, and 36. However almost any suitable insoluble coloured compound may be used in the inks of the invention. It is also possible to mix more than one pigment in the inks of the invention.

Many of the above pigments are available commercially in finely divided forms which are specifically aimed at ink jet use. It is preferred to use such available forms in the inks of this invention.

Preferred pigments include Carbon black which is listed by the Colour Index as Pigment Black 7. Examples include furnace black, lamp black, acetylene black, and channel black; further it is also possible to use processed pigments having a surface treatment of the particles such as so-called self dispersing carbon black and graft carbon black. By a surface modified carbon black is meant a carbon black pigment, the particles of which have been modified by surface oxidation or by incorporation of groups such as, for example, carboxylic or sulphonic acid groups at the surface. Such modified carbon black pigments are known and commercially available from suppliers such as Cabot Corporation and Orient Corporation.

Preferred cyan pigments include Phthalocyanine pigments, for example C.I. Pigment Blue 15:1, 15:2, 15:3, 15:4, 15:6, 16, 75, 76, and 79, and most preferably the Phthalocyanine pigment is β-copper phthalocyanine, C.I. Pigment Blue 15:3 or 15:4. Preferred magenta pigments include Quinacridone pigments, for example C.I. Pigment Red 122, 207, and 209 or Pigment Violet 19, of which Pigment Red 122 is especially preferred. Preferred yellow pigments include, for example C.I. Pigment Yellow 74, 128, 155, and 180.

The pigment may be used in the form of a dry powder. However organic pigments are often supplied commercially as a concentrated aqueous pigment dispersion, and this invention is also useful for pigments supplied as such dispersions, which commonly include dispersants and other cosolvents as well as water. Alternatively the pigment may be supplied in the form of a water wet presscake. In presscake form, the pigment is not aggregated to the extent that it is in dry form and thus the pigment does not require as much deaggregation in the process of preparing the inks from dry pigments.

The total pigment concentration of the ink may be up to approximately 30% by weight, but will generally be between about 1% and about 15%, preferably approximately 3 to 8%, by weight of the total ink composition. The concentration depends on the particular pigment used and the printer.

1,3-Propane diol is commercially available. The content of 1,3-propanediol in the ink may be up to 10%, preferably between approximately 1% and approximately 8%.

The term emulsion resin used herein refers to an aqueous dispersion comprising water or an aqueous solvent as a continuous phase and small particles of an organic polymer as dispersed particles; such may also be called a latex, an aqueous emulsion, or a polymer emulsion. Preferably the small particles of the emulsion resin are characterised by an average particle size below approximately 200 nm, more preferably below approximately 100 nm. Such emulsion resins may generally be prepared by emulsion polymerisation.

Preferably, in order to avoid blockage of the nozzles of the printer the organic polymer of the emulsion resin has a glass transition point (Tg) above room temperature, for instance 30°C or above, preferably 40°C or above. Further, the polymer of the emulsion resin preferably has a minimum film-forming temperature 30° C or above, especially 40°C or above. It is especially preferred that the insoluble polymer of the emulsion resin particles should have a coalescing property in the presence of the organic solvent components of the ink. The term coalescing property means that the polymer of the emulsion resin will form a non-tacky resin film in the presence of the organic components of the ink after evaporation of the aqueous component. This resin film functions to bind the pigment particles contained in the ink composition together after printing and fix them onto the surface of recording medium. It is considered that this can provide images having excellent rubbing/scratch resistance and waterfastness.

Suitable emulsion resins are known and are commercially available. Specific examples of the polymer component constituting the small polymeric particles include acrylate polymers, vinyl acetate polymers, styrene/butadiene polymers, styrene/acrylate polymers, butadiene polymers, epoxy polymers, urethane polymers, copolymers of such types, and the like. Copolymers may be present in the form of a block copolymer or a random copolymer. Preferably the emulsion resin comprises an acrylate polymer characterised by an acid number below approximately 100 mg KOH/gram of polymer. The acid number of such a polymer is a well known property and is defined as the number of milligrams of potassium hydroxide required to neutralise 1 gram of the material. A particularly suitable commercially available emulsion resin is an acrylate polymer having an acid number of 70 mg KOH/gram of polymer and an average particle size of 84.7 nm, further characterised by a glass transition temperature (Tg) of 64°C, and a molecular weight of >200,000.

The concentration of the emulsion resin in the ink may be up to approximately 10%, preferably between approximately 1% and 8%, dry solid content by weight of the total ink composition. The concentration depends on the particular resin used and the properties desired of the ink.

By solution resin is meant an organic resin polymer which is soluble in the aqueous ink formulation. Suitable solution resins include in particular acrylate polymers comprising solubilising monomers such as acrylic, methacrylic, and maleic acids, generally in combination with one or more additional vinylically unsaturated monomers such as styrene, acrylate esters, and the like. The polymer may be present in the form of a block copolymer or a random copolymer. Many such acrylate polymers and copolymers are well known and commercially available. Preferably the solution resin is characterised by an acid number greater than approximately 100 mg KOH/gram of polymer, preferably within the range of approximately 150 to 250 mg KOH/gram of polymer.

Such resins may be supplied commercially in the form of concentrated aqueous solutions, or as solids or emulsions which are to be dissolved in water in the presence of a base. Suitable bases for dissolving such resins include sodium or potassium hydroxide, ammonia, or an organic amine base such as ethanolamine, diethanolamine, triethanolamine, dimethylaminoethanol, 1-(dimethylamino)-2-propanol, or 2-amino-2-methyl-1-propanol. It is also possible to use mixtures of such bases to dissolve the copolymer resin.

It is found that the solution resin improves refire performance and the jetting and printing properties of the ink. The concentration of solution resin in the ink may be up to approximately 10%, preferably between approximately 0.5% and 5%, especially between approximately 0.5% and 2%, dry solid content by weight of the total ink composition. The concentration depends on the particular resin used and the properties desired of the ink.

By an aqueous carrier medium is meant a medium which is water or is predominantly water. Deionised water is commonly used. Optionally and preferably the ink composition may additionally comprise at least one water-miscible organic cosolvent. The additional water-miscible organic cosolvent is not particularly limited and may be any organic solvent which has sufficient solubility in water. Preferred examples of water-miscible organic solvents that may be selected include hydroxylic organic solvents, especially solvents having at least 2 hydroxyl groups; for example ethylene glycol, thiodiglycol, glycerol, 1,2-hexanediol, and 1,5-pentanediol; ethylene glycol condensates such as diethylene glycol, triethylene glycol, polyethylene glycol, and ethoxylated glycerol; nitrogen containing organic compounds such as 1,3-dimethyl imidazolidinone, urea, pyrrolidone, and N-methyl-2-pyrrolidone; and mixtures comprising these solvents.

The ink may comprise up to a total of approximately 50% of the additional organic solvent or solvents, but preferably the ink comprises less than 20% additional organic cosolvent, most preferably between approximately 5% and 15% additional organic cosolvent.

Preferably the inks of the invention also comprise at least one surfactant. The surfactant used is not particularly limited. Examples of suitable surfactants include nonionic surface active agents such as alkylene oxide derivatives, for example polyethylene glycol alkyl or alkylaryl ethers, polyethylene glycol esters, polyethylene glycol ethers of acetylene diols, or polyethylene glycol / polypropylene glycol condensates; glycidol derivatives such as alkylphenol polyglycerides; aliphatic esters of polyhydric alcohols or sucrose; anionic surfactants such as dialkyl sulphosuccinates, N-acyl-N-alkyltaurines, N-acylsarcosinates, alkylsulphonates, alkylbenzenesulphonates, alkylnaphthalenesulphonates, and surfactants comprising a sulphuric acid ester group or a phosphoric acid ester group, such as alkyl sulphuric acid esters, alkyl phosphoric acid esters and sulphated or phosphated polyethylene glycol alkyl or alkylaryl ethers. Many suitable surfactants are well known and commercially available. A particularly suitable surfactant is sodium dioctyl sulphosuccinate.

Further, the ink may comprise a combination of surfactants. In particular, the ink may comprise a combination of the preferred sulphosuccinate surfactant with one or more additional surfactants. An especially preferred surfactant combination comprises sodium dioctyl sulphosuccinate and a polyethylene glycol alkyl ether. Non ionic polyethylene glycol alkyl ether surfactants are well known and include ethoxylated long chain alcohols such as lauryl alcohol, cetyl alcohol, stearyl alcohol, oleyl alcohol, isodecyl alcohol, and isotridecyl alcohol.

Further, fluorinated or perfluorinated surfactants or silicone surfactants may also be used, but one of the advantages of the invention is that good properties of the inks and prints may be attained without use of such surfactants.

Another preferred surfactant combination comprises sodium dioctyl sulphosuccinate and a fluorinated surfactant. The fluorinated surfactant in the ink of the invention may include a nonionic or anionic fluorinated or perfluorinated surfactant. Surfactants of this type are known and commercially available. An especially preferred nonionic fluorinated surfactant is a fluoroalkyl alcohol substituted polyethylene glycol ether of the formula R_{F}CH₂CH₂-(OCH₂CH₂)ₓOH wherein R_{F} is a perfluoroalkyl group having up to approximately 8 carbon atoms and x is is 1 to 15. A preferred anionic fluorinated surfactant is a fluorinated lithium carboxylate of the formula R_{F}CH₂CH₂SCH₂CH₂CO₂Li wherein R_{F} is a perfluoroalkyl group having up to approximately 9 carbon atoms.

The surface tension of the ink may be adjusted by appropriate addition of surfactant or surfactants to be below 40 mN/m (dynes/cm), preferably between approximately 20 mN/m dynes/cm and approximately 35 mN/m; more preferably between approximately 20 mN/m and approximately 30 mN/m.

The concentration of surfactant or surfactants will be selected according to the printer used and the desired properties of the ink, but especially to provide adequate wetting of hydrophobic media surfaces to be printed with the ink system. Typically the sulphosuccinate surfactant may be present in the amount of up to approximately 1.5% by weight, preferably between 0.2% and 1.5% by weight, based on the total weight of the ink composition. The additional polyethylene glycol alkyl ether surfactant may be present in the amount of up to approximately 1.5% by weight, preferably between 0.2% and 1% by weight, based on the total weight of the ink composition. The additional fluorinated surfactant may be present in the amount of up to approximately 1% by weight of the ink, preferably up to 0.2% by weight, especially between 0.05% and 0.2% by weight.

The inks of the invention may additionally comprise a silicone surfactant. Silicone surfactants are well known and commercially available. A particularly suitable silicone surfactant is a polyether modified poly-dimethyl-siloxane. The silicone surfactant may be present in the amount of up to approximately 1% by weight of the ink, preferably up to 0.2% by weight, especially between 0.05% and 0.2% by weight.

The addition of the silicone surfactant is especially preferred when the pigment used is a Phthalocyanine pigment. Thus according to this particularly preferred embodiment of the invention there is provided a cyan ink jet ink composition comprising:
(a) at least one Phthalocyanine pigment;
(b) at least one emulsion resin;
(c) at least one solution resin;
(d) 1,3-propane diol;
(e) at least one fluorinated surfactant;
(f) a sulphosuccinate surfactant;
(g) at least one silicone surfactant; and
(h) an aqueous carrier medium,
wherein the Phthalocyanine pigment, emulsion resin, fluorinated surfactant, and aqueous carrier medium are as hereinbefore defined.

Optionally and preferably the ink may also comprise at least one dispersant for the pigment. The purpose of the dispersant is to stabilise the particles and prevent flocculation, aggregation, and settling of the ink. Suitable dispersants for pigmented ink jet inks are well known in the art, and include polymeric dispersants as well as some non-polymeric compounds of the surfactant type. Suitable dispersants for the inks of this invention include macromolecular polyionic dispersants, for example copolymers of styrene with acrylic, methacrylic, or maleic acids; various types of poly(ethylene oxide) condensates such as alkyl polyethylene oxide ethers and sulphate or phosphate esters thereof; and surfactants such as sarcosinate compounds. A preferred dispersant for the inks of the invention is a styrene/acrylate copolymer, by which is meant a copolymer comprising styrene or a substituted styrene; acrylic, methacrylic, or maleic acids; and optionally with additional vinylically unsaturated comonomers such as acrylate esters. Preferably this dispersant is characterised by an acid number of between about 150 and about 250 mg KOH/ gram of polymer, a glass transition temperature between approximately 70°C and approximately 150°C, and a molecular weight of between approximately 2000 and approximately 25000, and most preferably the molecular weight is approximately 5000 - 15000.

Many suitable styrene acrylate dispersants are commercially available. Such styrene acrylate copolymer dispersants may be supplied commercially in the form of concentrated solutions in aqueous base, or as solids which are to be dissolved in water in the presence of a base. Suitable bases for dissolving such dispersants include sodium or potassium hydroxide, ammonia, or an organic amine base such as ethanolamine, diethanolamine, triethanolamine, dimethylaminoethanol, 1-(dimethylamino)-2-propanol, or 2-amino-2-methyl-1-propanol. It is also possible to use mixtures of such bases to dissolve the styrene acrylate copolymer. The dispersant may be the same as the solution resin.

There may be present up to 400% of the dispersant by weight on the pigment, but preferably between about 10% and about 100% by weight on the pigment, and most preferably approximately 20 to 50% by weight on the pigment, depending on the pigment and dispersant used and other properties desired of the ink.

Thus according to a particularly preferred aspect of this invention there is provided an ink jet ink composition comprising:
(a) at least one pigment;
(b) a dispersant for the pigment;
(c) 1,3-propane diol;
(d) at least one emulsion resin;
(e) at least one solution resin;
(f) at least one surfactant;
(g) at least one additional water-miscible organic solvent; and
(h) an aqueous carrier medium,
wherein the pigment, dispersant, emulsion resin, solution resin, surfactant, additional water-miscible organic solvent, and aqueous carrier medium are as hereinbefore defined.

Further, the pigmented inks of the invention may also comprise other components which are advantageously added to aqueous ink jet inks, for example viscosity modifiers, biocides, and sequestering agents such as EDTA.

The pH of the ink may be controlled by the quantity of base added to the solution resin or dispersant, or by appropriate addition of acid or base to the final ink. Generally the pH of the ink is between about 7 and about 10, preferably between approximately 8 and 9.5.

The preferred viscosity of the inks depends on the specific printer in use and on the application. One of the advantages of the invention is that a desirably low viscosity of the inks may readily be achieved, typically between approximately 2.5 mPa.s (cP) and approximately 4.5 mPa.s (cP). However if necessary the viscosity may be increased by appropriate selection of components, in particular the solution resin and organic cosolvent, by changing the concentration of these components, or by adding thickeners. In particular, it may be desirable to include a thickener in the ink formulation for printing using piezo drop-on-demand type printers to achieve the desired viscosity of typically greater than 4.5 mPa.s, especially between approximately 5 mPa.s and approximately 20 mPa.s. Suitable thickeners include acrylic polymers, urethane polymers, and polyethers, of which acrylate polymers are preferred. Suitable acrylate polymers include the same classes of materials used as the solution resin.

Such thickeners may be supplied commercially in the form of concentrated aqueous solutions, or as solids or emulsions which are to be dissolved in water in the presence of a base. Suitable bases for dissolving such resins include sodium or potassium hydroxide, ammonia, or an organic amine base such as ethanolamine, diethanolamine, triethanolamine, dimethylaminoethanol, 1-(dimethylamino)-2-propanol, or 2-amino-2-methyl-1-propanol. It is also possible to use mixtures of such bases to dissolve the copolymer resin.

The concentration of thickener in the ink may be up to approximately 1%, preferably up to approximately 0.5%, especially between approximately 0.1% and 0.5%, dry solid content by weight of the total ink composition. The concentration depends on the particular thickener used and the properties desired of the ink.

It is generally desirable to prepare a concentrated dispersion by dispersing the pigment in water in the presence of one or more dispersants, and then to dilute this dispersion with additional water together with the 1,3-propanediol, resins, and any other additives to form the ink. This technique permits preparation of a greater quantity of pigmented ink from the equipment. By dilution, the ink is adjusted to provide the desired concentration, colour strength, and other properties for the particular application.

Thus another preferable aspect of the invention provides a method for preparing an ink jet ink comprising:-
(a) dispersing at least one pigment and a dispersant for the pigment in an aqueous carrier medium; and
(b) diluting the dispersion thus produced with 1,3-propane diol, together with at least one emulsion resin, at least one solution resin, at least one additional water-miscible organic solvent, and water;
to produce an ink.

The dispersing step may be accomplished by many well known methods, for example in a horizontal mini mill, a ball mill, a roll mill, an attritor, a homogeniser or by passing the mixture through a plurality of nozzles within a liquid jet interaction chamber at a liquid pressure of at least 1000 psi (6-89 MPa) as described in United States Patent Specification 5,026,427 to produce a uniform dispersion of the pigment particles in the aqueous carrier medium.

A suitable average particle size of the pigment is 10 µm or less, preferably 1 µm or less, most preferably 200 nm or less, especially from 50 nm to 200 nm.

In another embodiment of the present invention there is provided an ink set comprising two or more inks according to the invention. In particular, there is provided a set of four inks comprising the three subtractive primary colours cyan, magenta, and yellow, together with a black ink (commonly referred to as CMYK). Using this ink set, the number per unit area and diameter of the ink dots formed on the recording medium may be controlled for colour mixing according to the densities of three primary colour components in the original images to be recorded, thus reproducing the original colour.

In yet another aspect of the present invention, there is provided an ink jet printing process using the ink of the invention as hereinbefore defined comprising:
- Taking an ink jet printer;
- loading the printer with an ink comprising:
   (a) at least one pigment;
   (b) a dispersant for the pigment;
   (c) 1,3-propane diol;
   (d) at least one emulsion resin;
   (e) at least one solution resin;
   (f) at least one surfactant
   (g) at least one additional water-miscible organic solvent; and
   (h) an aqueous carrier medium.
- printing the ink on to an ink jet printable medium; and
- drying the print using infra-red radiation.

Any suitable ink jet printer may be used, but a piezo drop-on-demand printer is especially preferred.

The ink jet printable medium may be any suitable sheet like medium as commonly used for ink-jet printing able to accept the ink formulation, for example paper, coated paper, and polymeric substrates such as cellulose acetates, polyethylene, polypropylene, poly vinyl chloride, and polyesters including poly ethylene terephthalate and poly ethylene naphthalate. However, the inks of the invention are particularly suitable for printing on hydrophobic substrates. Thus according to this preferred embodiment of the invention the printable medium is a hydrophobic polymeric medium such as polyvinyl chloride, polyester, polyethylene, or polypropylene, and most preferably is untreated polyvinyl chloride.

Use of infra-red radiation for drying an ink jet print is known according to British Patent application GB 2 370 834 A and elsewhere. There is no particular restriction on the infra red heating unit used for drying the print, which may be any of those known in the art. The emitted infra red radiation may be so-called short wave, of wavelength between about 0.5 µm and 2 µm, medium wave emitting between about 2 µm and about 3.5 µm, or long wave emitting above 3.5 µm. Preferably medium wavelength radiation is used. Suitable infra red radiation sources and units are well known, and commercially available from companies such as Ircon Drying Systems AB of Vänersborg, Sweden; Krelus AG of Hirschthal, Switzerland; Heraeus Noblelight GmbH of Kleinostheim, Germany; and Compact Engineering Limited of Thirsk, England.

Preferably the print is dried using infra-red radiation in the presence of an ample flow of air, which not only serves to cool the infra-red source but may be directed towards the print surface to disturb the boundary layer and aid evaporation.

The inks, ink set, and printing method of the invention produce pleasing high quality images of good image tone and high maximum density. Furthermore the prints exhibit excellent lightfastness suitable for applications such as banners, signage, displays, posters, billboards, and the like.

The following examples will serve to illustrate the invention. These examples are merely representative and are not inclusive of all the possible embodiments of the invention.

### Example 1

In this example, an ink according to a preferred embodiment of the invention comprising the solvent 1,3-propanediol and sulphosuccinate surfactant but without fluorinated or silicone surfactants is prepared and compared with five comparison inks with various alternative solvents.

### Preparation of Pigment Dispersions

A magenta pigment dispersion was prepared according to the formulation shown in Table 1, where all parts are by weight, using a Microfluidiser model M210C at 30000 psi (200 MPa). The magenta pigment was a commercial sample of Pigment Red 122 available under the trade name Cromophtal Pink PT from Ciba. The dispersant was a commercially available styrene acrylate copolymer having an acid number of 215 mg KOH/gram of polymer, a Tg of 95°C, and a molecular weight of 8500 neutralised with potassium hydroxide. The dispersion was then diluted to a pigment concentration of 10% and centrifuged to remove oversized particles. The average particle size of the pigment dispersion was less than 200 nm.

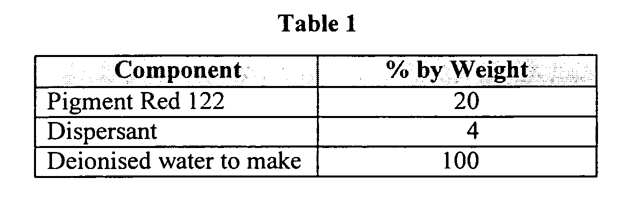

### Preparation of Inks

Inks were prepared according to the formulations shown in Table 2 using samples of the 10% dispersion prepared above. In this table all parts are measured by weight. Surfactant A was sodium dioctyl sulphosuccinate available commercially as a 70% solution in propylene glycol. The emulsion resin used was a commercially available acrylate polymer emulsion having a solid content of 46% and an average particle size of 84.7 nm; the polymer has an acid number of 70 mg KOH/gram of polymer, a minimum film-forming temperature of 60°C, a Tg of 64°C, and a molecular weight >200,000. The solution resin is a 10% aqueous solution of the same styrene acrylate polymer used as dispersant. EG1 is an ethoxylated glycerol with a degree of ethoxylation approximately 26. The comparison solvent DPM is dipropylene glycol methyl ether and the comparison solvent NMP is N-methyl pyrrolidone.

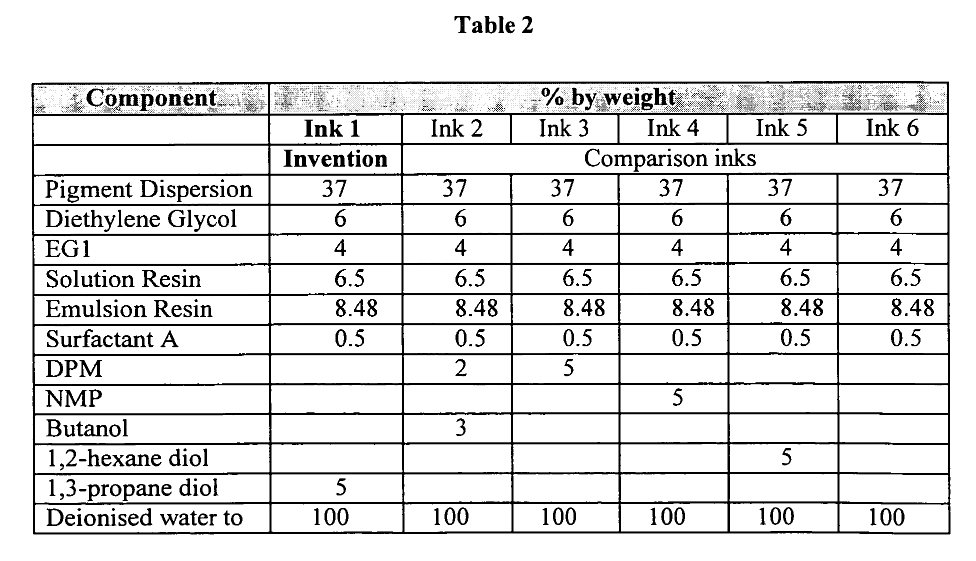

The pH of the inks was adjusted to >8 when necessary by appropriate additions of potassium hydroxide.

### Print Test

The inks were loaded into cartridges and test charts printed using an Epson 1160 piezo drop-on-demand printer on standard commercial uncoated untreated matt vinyl (MPI3021) from Avery Dennison. The inks were in-line dried using a Heraeus Noblelight 1 Kw medium wave carbon IR drier in combination with high air flow.

It was found that comparative inks **2, 3,** and **4** failed to jet successfully. Stability of the remaining inks was assessed by determining the average particle size of a sample stored at ambient temperature for 7 days and of another sample incubated at 70°C for 7 days using a Polymer Laboratories LSP Light Scattering Photometer. Under these conditions, stability is acceptable if the sample stored at ambient temperature retains a sufficiently small particle size and if the growth in average particle size for the incubated sample is less than 10 nm. The particle size results for inks **1, 5,** and **6** are shown in shown in Table 3.

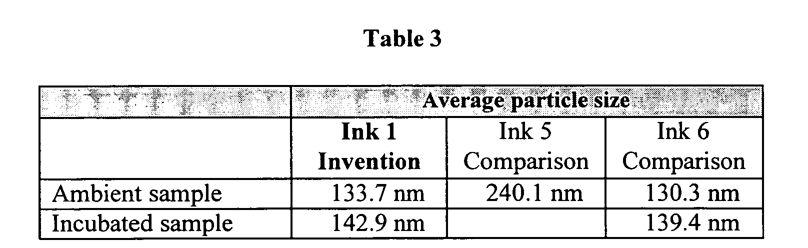

It is seen that inks **1** and **6** show acceptable stability but that the particle size of ink **5** is unacceptable after ambient storage; the particle size of the incubated sample of this ink was not determined The prints from inks **1** and **6** were assessed visually for print quality. The inventive ink **1** was assessed as having excellent print quality, but the comparison ink gave poor print quality.

Further, adhesion of the inventive ink **1** to the substrate was tested as follows: A sticky tab was adhered to a printed area of the test chart and then pulled off at an angle of 180° using a quick, smooth motion. Adhesion of the ink to the substrate was assessed visually by looking at the area where the tab had been pulled off the print for any surface damage or loss of ink. If no ink had been removed adhesion was assessed as excellent, but if the surface of the ink film has been marked or damaged or if a lot of ink had been removed then adhesion was poor. Adhesion of the inventive ink was assessed as very good.

### Example 2

In this example a cyan ink according to a preferred embodiment of the invention comprising the solvent 1,3-propanediol and sulphosuccinate surfactant but without fluorinated or silicone surfactants is prepared and compared with two comparison inks containing alternative solvents.

### Preparation of Pigment Dispersions

A 10% cyan pigment dispersion was prepared following the method of Example 1 to give the formulation shown in Table 4, where all parts are by weight. The cyan pigment was a commercial sample of Pigment Cyan 15:3 available under the trade name Toner BG from Clariant. The dispersant was the same as in Example 1. The average particle size of the dispersion was less than 200 nm.

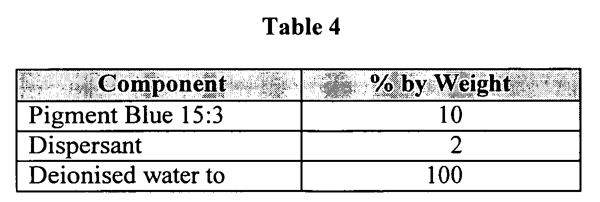

### Preparation of Inks

Inks **7 - 9** were prepared according to the formulations shown in Table 5 from the dispersion prepared above. All parts are measured by weight. The surfactant, emulsion resin, solution resin, and ethoxylated glycerol were as in Example 1.

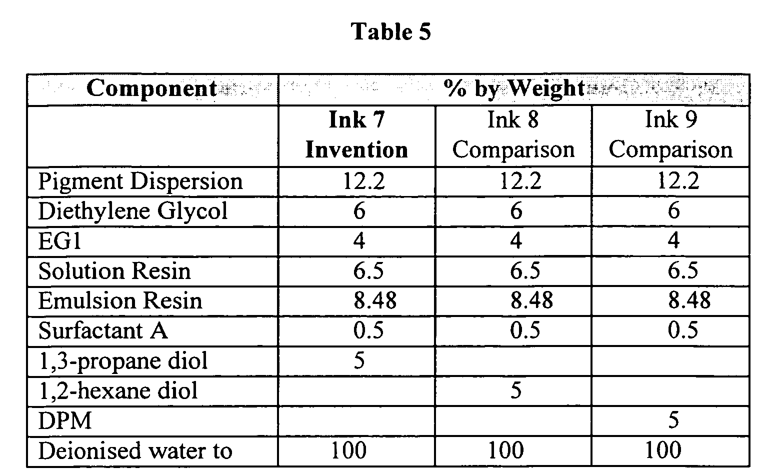

The pH of the inks was adjusted by appropriate additions of potassium hydroxide to >8 when necessary. Ink stability was assessed as in Example 1.

### Print Test

All three inks were printed and tested as in Example 1. The print quality of the inventive ink **7** was as good as that of ink **1** and adhesion to the vinyl was very good. Comparison Inks **8 - 9** gave poor print quality or were unstable with particle size growth.

### Example 3

In this example a yellow ink according to a preferred embodiment of the invention comprising the solvent 1,3-propanediol and sulphosuccinate surfactant but without fluorinated or silicone surfactants is prepared and compared with two comparative yellow inks with alternative solvents.

### Preparation of Pigment Dispersion

A 10% yellow pigment dispersion was prepared as in Example 1 according to the formulation shown in Table 6, where all parts are by weight. The yellow pigment was a commercial sample of Pigment Yellow 155 available under the trade name Novoperm Yellow 4G from Clariant. The dispersant was the same as in Example 1. The average particle size was less than 200 nm.

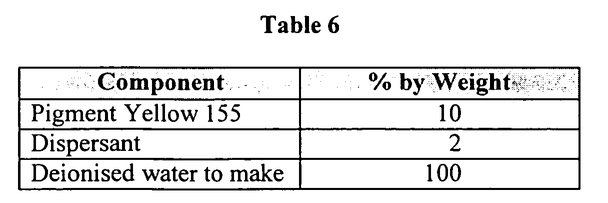

### Preparation of Inks

Inks were prepared using the dispersion prepared above by diluting according to the formulations shown in Table 7. All parts are measured by weight. The surfactant, emulsion resin, solution resin, and ethoxylated glycerol were the same as in Example 1. The pH of the inks was adjusted to >8 when necessary by appropriate additions of potassium hydroxide. Ink stability was assessed as in Example 1.

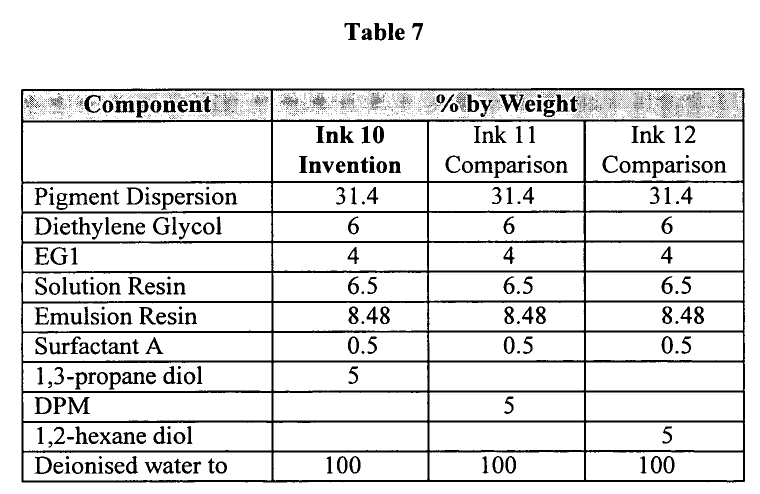

### Print Tests

All three inks were printed and tested as in Example 1. The print quality of the inventive ink **10** was as good as inventive ink **1** and this ink had very good adhesion to the vinyl. The comparison inks **11 - 12** were of poorer print quality or were unstable for particle size.

### Example 4

In this example a black ink according to a preferred embodiment of the invention comprising the solvent 1,3-propanediol and sulphosuccinate surfactant but without fluorinated or silicone surfactants is prepared and compared with two comparative black inks.

### Preparation of Pigment Dispersion

A 10% black pigment dispersion was prepared as in Example 1 according to the formulation shown in Table 8, where all parts are by weight. The black pigment was a commercial sample of Pigment Black 7 available under the trade name S170 from Degussa. The dispersant was the same as in Example 1. The average particle size was less than 200 nm.

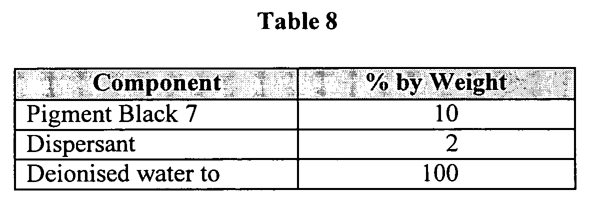

### Preparation of Inks

Three inks were prepared using the dispersion prepared above by diluting according to the formulations shown in Table 9. All parts are measured by weight.

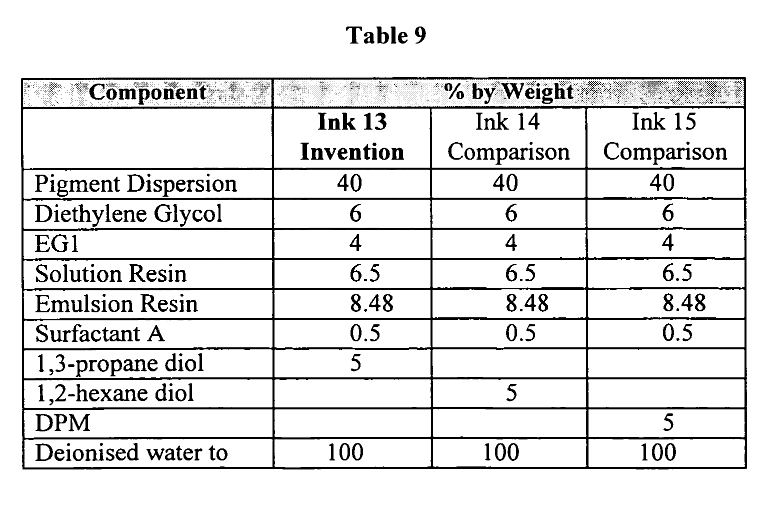

The surfactant, emulsion resin, solution resin, and ethoxylated glycerol were the same as in Example 1. The pH of the inks was adjusted by appropriate additions of potassium hydroxide to >8 when necessary. Ink stability was assessed as in Example 1.

### Print Test

The inks were printed and tested as in Example 1. The printability of the inventive ink **13** was as good as that of inventive ink 1, and this ink had very good adhesion to the vinyl. Comparison inks **14 - 15** gave poor print quality or were unstable with respect to particle size.

### Example 5

An ink set incorporating inventive inks **1** (Magenta), **7** (Cyan), **10** (Yellow) and **13** (Black) was loaded into an Epson 1160 printer. A four colour test pattern incorporating cyan, magenta, yellow, black, red, green, blue and three colour density wedges and other elements was printed on uncoated untreated matt vinyl (MPI3021) from Avery Dennison. The inks were in-line dried using a Heraeus Noblelight medium wave IR drier in combination with high air flow. The print quality of the inventive ink set was assessed as excellent with smooth solid colour fills and little intercolour bleed. The quality was similar to that expected when using an inkjet coated coated vinyl, showing the usefulness of the inventive inks and ink set.

### Example 6

In this example four inventive CMYK inks according to a preferred embodiment of the invention comprising the solvent 1,3-propanediol and sulphosuccinate surfactant but without fluorinated or silicone surfactants are prepared which have a viscosity of approximately 14 mPa.s (cP) for evaluation through an industrial piezo drop-on demand printhead.

### Preparation of Pigment Dispersions

10% pigment dispersions were prepared using the method of Example 1 according to the formulations shown in Table 10, where all parts are by weight. The average particle size of the dispersions was less than 200 nm.

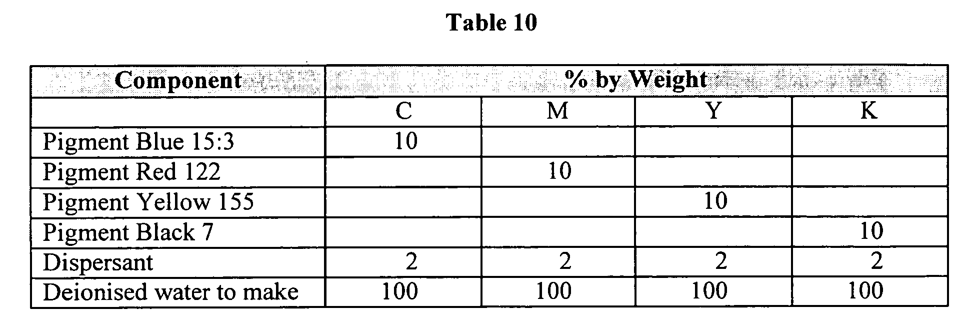

The cyan pigment was a commercial sample of C.I. Pigment Blue 15:3 available under the trade name Toner Cyan BG from Clariant. The magenta pigment was a commercial sample of C.I. Pigment Red 122 available under the trade name Cromopthal Pink PT from Ciba. The yellow pigment was a commercial sample of C.I. Pigment Yellow 155 available under the trade name Novoperm Yellow 4G from Clariant. The black pigment was a commercial sample of C.I. Pigment Black 7 available under the trade name S170 from Degussa. The dispersant was the same as in Example 1.

### Preparation of Inks

Inks were prepared using the four dispersions prepared above by diluting according to the formulations shown in Table 11. All parts are measured by weight. The surfactant, emulsion resin, solution resin, and ethoxylated glycerol were the same as in Example 1. The pH of the inks was adjusted to >8 when necessary by appropriate additions of potassium hydroxide. Thickener A was a commercial base activated hydrophobically modified alkali swellable emulsion associative acrylic thickener available from Ciba as 30% solids in water under the trade name Viscalex HV30. The viscosity of all the inks was 14 mPa.s (cP) at 35°C measured using a Brookfield DV-1 + Viscometer.

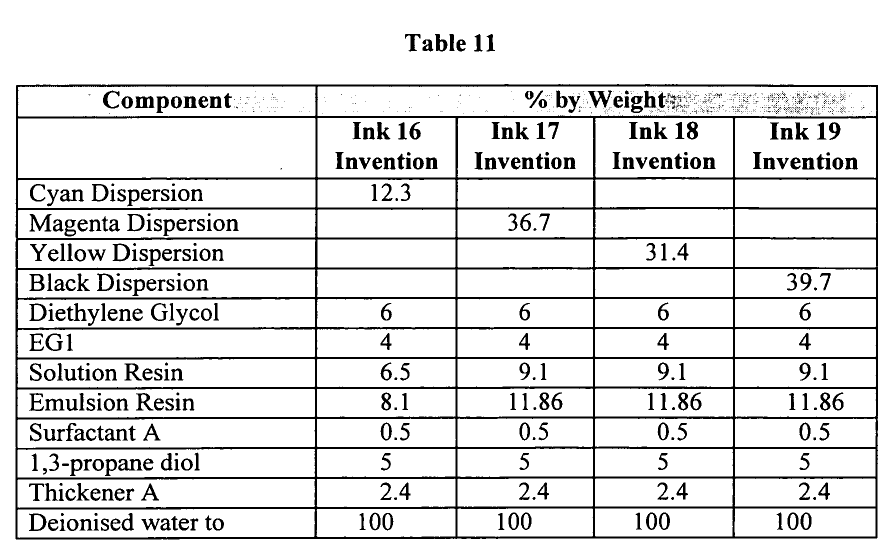

### Print Tests

All four inks were evaluated for their quality and sustainability of jetting through a Spectra Nova AQ industrial piezo drop-on-demand printhead. The jetting quality of the inventive inks **16 - 19** was excellent over a wide range of firing frequencies and drive voltages with good sustainability being observed.

### Example 7

In this example, three inventive magenta inks are prepared comprising a combination of a sulphosuccinate surfactant and a fluorinated surfactant.

### Preparation of Inks

Inventive inks were prepared according to the formulations shown in Table 12 using samples of the 10% magenta pigment dispersion prepared as in Example 1 above.

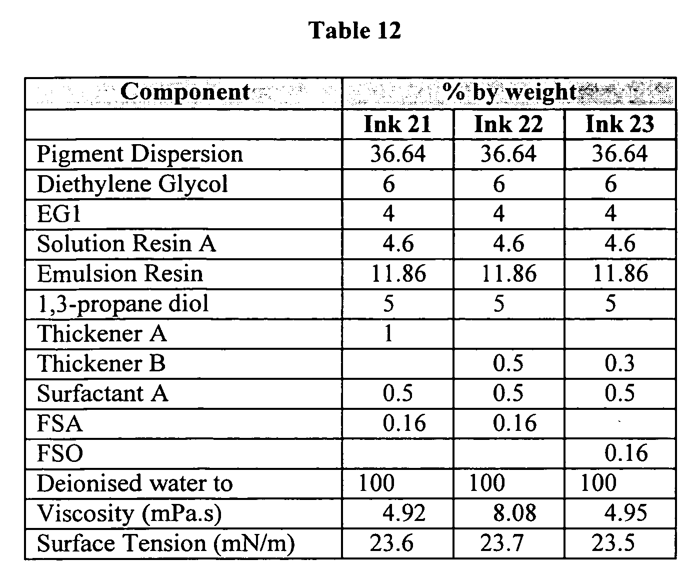

In this table all parts are measured by weight. The emulsion resin and EG1 are the same as in Example 1. Solution resin A is a 20% solution of the same resin used in Example 1. Two commercially available associative acrylic thickeners were used as viscosity modifiers: thickener A was as in Example 6, and thickener B is a polyacrylate blend. The surfactants used in these inks are as follows: surfactant A is the sulphosuccinate as in Example 1; FSA is an anionic fluorinated surfactant of the formula R_{F}CH₂CH₂SCH₂CH₂CO₂Li wherein R_{F} is a perfluoroalkyl group having 1 to about 9 carbon atoms commercially available from Dupont under the trade name of Zonyl^{RTM} FSA; FSO is a non ionic fluoro surfactant of the formula R_{F}CH₂CH₂-(OCH₂CH₂)ₓOH wherein R_{F} is a perfluoroalkyl group having 1 to about 7 carbon atoms and x is 1 to 15 commercially available as a solution in ethylene glycol from Dupont under the trade name of Zonyl^{RTM} FSO.

The pH of the inks was adjusted to >8 when necessary by appropriate additions of ammonia. The viscosity of the inks was measured as in example 6 and the surface tension at 25°C measured using a Brookfield DV-1 + Viscometer. The results are shown in Table 12.

### Print Test

The inks were evaluated for their jetting quality and sustainability of jetting through an Hitachi Gen3E1 industrial piezo drop-on-demand printhead. Test images were printed onto commercial uncoated untreated glossy vinyl (MPI1005) from Avery Dennison and the prints were in-line dried using a Heraeus Noblelight 1 kW medium wave carbon Infra-red drier in combination with high air flow. The jetting quality of inventive inks **21 - 23** was excellent over a wide range of firing frequencies, drive voltages and dot spacings with good sustainability being observed. Print quality was visually assessed as satisfactory.

Further, adhesion of the ink to the substrate was tested as in Example 1: adhesion of inventive inks **21 - 23** was assessed as excellent.

### Example 8

In this example a further inventive magenta ink comprising a blend of a sulphosuccinate surfactant and a fluorinated surfactant is prepared.

### Preparation of Pigment Dispersion

A magenta pigment dispersion was prepared using a Microfluidiser Model M110L at 12000 psi (82.7 MPa) according to the formulations shown in Table 15, where all parts are by weight. The magenta pigment was a commercial sample of C.I. Pigment Red 122 available from Sun Chemical under product code 228-6832. The dispersant was the same as in Example 1.

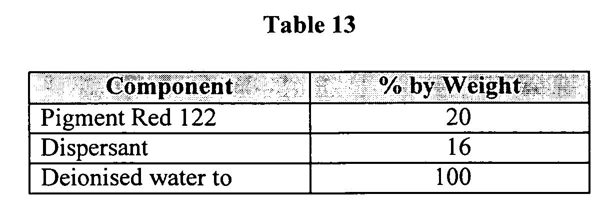

The dispersion was then diluted with additional water to give a pigment concentration of 10% and centrifuged to remove oversized particles. The average particle size of the dispersion was less than 200 nm.

### Preparation of Inks

Inventive ink **24** was prepared according to the formulation shown in Table 14 from the dispersion prepared above. All parts are measured by weight. The emulsion resin, solution resin, ethoxylated glycerol, viscosity modifier, anionic fluorinated surfactant, and surfactant A were as in Example 7. The pH of the inks was adjusted by appropriate additions of ammonia to >8 when necessary. The viscosity and surface tension of the inks were measured as in Example 7 and the results are given in table 14.

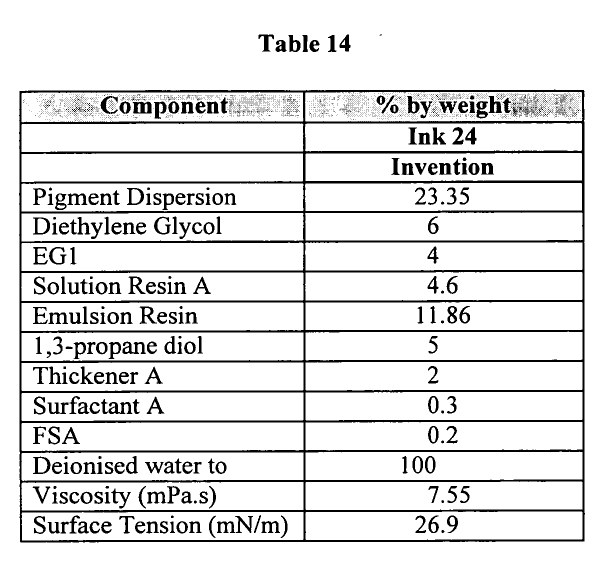

### Print Test

The ink was printed and tested as in example 7. The print quality of the inventive ink **24** was as good as that of inks **21 - 23** and adhesion to the vinyl was very good.

### Example 9

In this example two yellow inks comprising the inventive combination of sulphosuccinate and fluorinated surfactants are prepared.

### Preparation of Inks

Inks were prepared using a 10% yellow pigment dispersion prepared as in Example 3 above by diluting according to the formulations shown in Table 15. All parts are measured by weight. The emulsion resin, solution resin, ethoxylated glycerol, viscosity modifier, fluorinated surfactants, and surfactant A were as in Example 7. The pH of the inks was adjusted to >8 when necessary by appropriate additions of ammonia. The viscosity and surface tension of the inks were measured as in Example 7 and the results are given in Table 15.

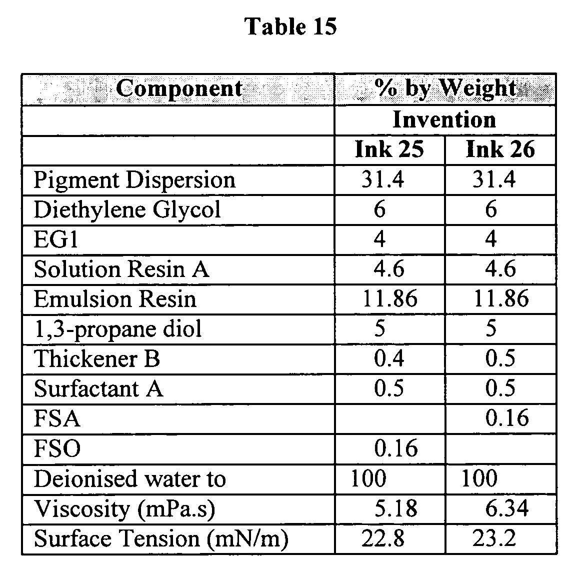

### Print Tests

The inks were printed and tested as in Example 7. The inventive inks **25** and **26** jetted as well as inventive ink **21** and provided good quality prints with very good adhesion to the vinyl.

### Example 10

In this example an inventive black ink comprising a blend of sulphosuccinate and fluorinated surfactants is prepared.

### Preparation of Pigment Dispersion

A black pigment dispersion was prepared using a Microfluidiser Model M110L at 12000 psi (82.7 MPa) according to the formulation shown in Table 16, where all parts are by weight. The dispersion was then diluted to a pigment concentration of 10% and centrifuged to remove oversized particles. The average particle size of the pigment dispersion was less than 200 nm. The black pigment was a commercial sample of Pigment Black 7 available under the trade name S 170 from Degussa. The dispersant was a commercially available styrene acrylate copolymer neutralised with potassium hydroxide.

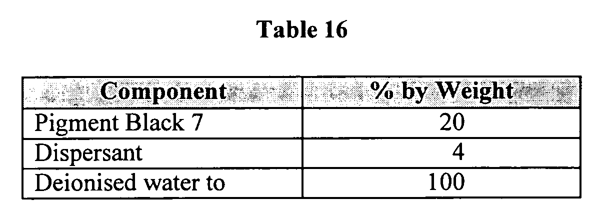

### Preparation of Ink

The ink was prepared using the dispersion prepared above by diluting according to the formulations shown in Table 17. All parts are measured by weight. The emulsion resin, solution resin, ethoxylated glycerol, viscosity modifier, fluorinated surfactant, and surfactant A were the same as in Example 7.

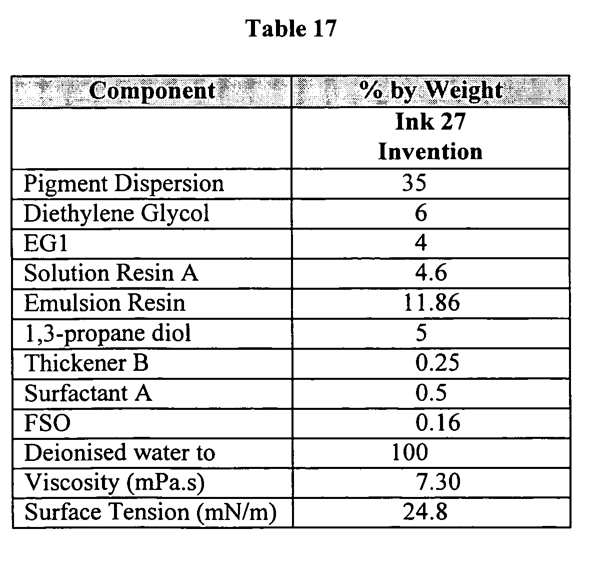

The pH of the ink was adjusted by appropriate additions of ammonia to >8 when necessary. The viscosity and surface tension of the ink was measured as in Example 7 and the results are given in Table 17.

### Print Test

The ink was printed and tested as in Example 7. The printability of the inventive ink **27** was as good as that of inventive ink **21**, and this ink had very good adhesion to the vinyl.

### Example 11

In this example a cyan ink according to an especially preferred embodiment of the invention comprising a blend of a fluorinated surfactant, a sulphosuccinate surfactant, and a silicone surfactant is prepared and compared with two additional inventive inks comprising a combination of sulphosuccinate and fluorinated surfactants.

### Preparation of Inks

Inks were prepared using a 10% cyan pigment dispersion prepared as in Example 2 above by diluting according to the formulations shown in Table 18. All parts are measured by weight. The emulsion resin, solution resin, ethoxylated glycerol, viscosity modifier, fluorinated surfactant, and surfactant A were the same as in Example 7; silicone surfactant F was a commercially available polyether modified dimethylpolysiloxane from BYK Chemie under the trade name BYK^{RTM}345. The pH of the ink was adjusted by appropriate additions of ammonia to >8 when necessary. The viscosity and surface tension of the inks were measured as in Example 7 and the results are given in table 18.

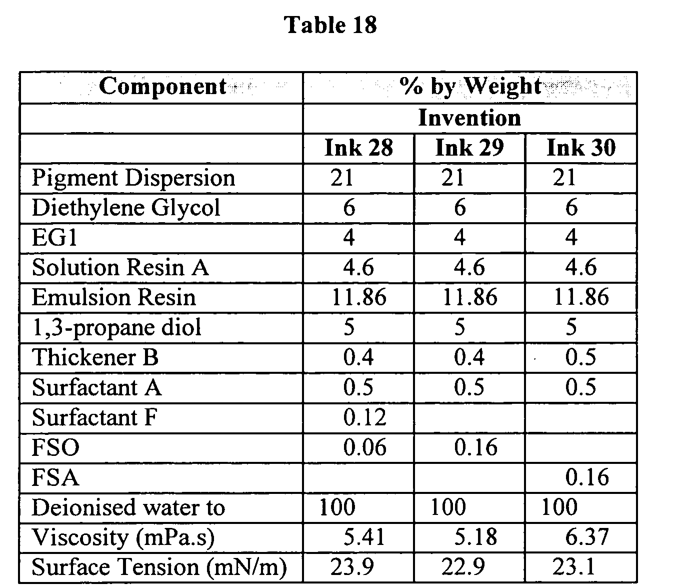

### Print Test

The inks were printed and tested as in Example 7. The jettability and print quality of inventive ink **28** were as good as that of inventive ink **21**, and this ink had very good adhesion to the vinyl. Inventive inks **29** and **30** also jetted well and had good print quality and adhesion.

### Example 12

In this example, cyan, magenta, yellow, and black inks according to a preferred embodiment of the invention comprising the solvent 1,3-propanediol and the preferred combination of a sulphosuccinate surfactant and a polyethylene glycol alkyl ether surfactant are prepared.

### Preparation of Inks

Inventive cyan, magenta, yellow, and black inks **31 - 34** were prepared according to the formulations shown in Table 19.

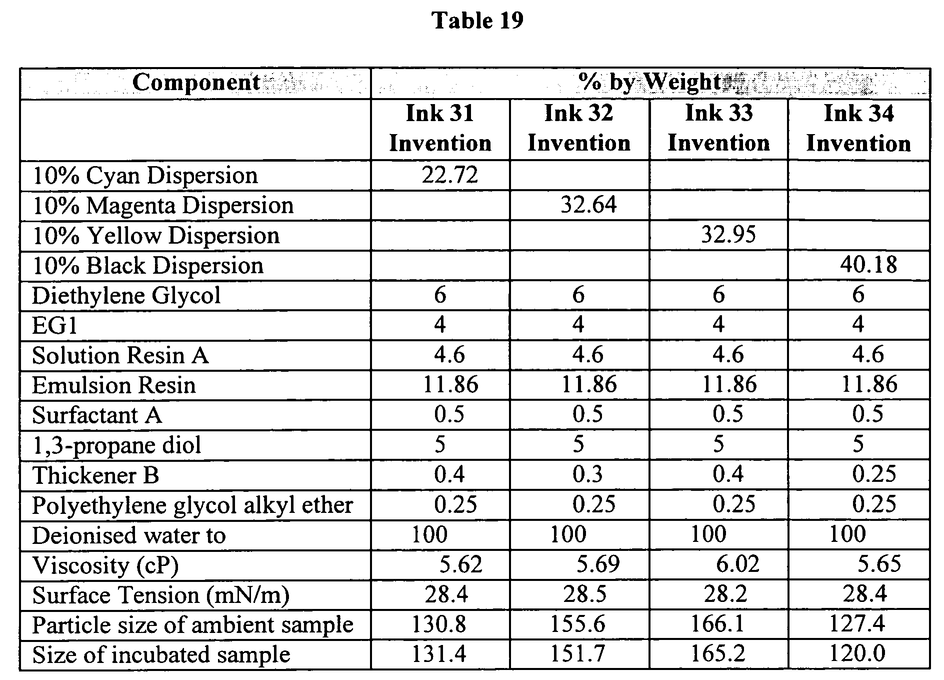

In all cases, the emulsion resin, solution resin A, ethoxylated glycerol, viscosity modifier, and surfactant A were the same as in example 7; the polyethylene glycol alkyl ether was a commercial non ionic ethoxylated alcohol surfactant. The cyan pigment dispersion was prepared as in Example 2 above, the magenta pigment dispersion was prepared as in Example 1 above, the yellow pigment dispersion was prepared as in Example 3 above, and the black pigment dispersion was prepared as in example 10 above. The viscosity and surface tension of the inks were measured as in Example 7 and the results are given in table 19. The average particle size of the inks was measured after 7 days ambient storage as in Example 1, and the average particle size of samples incubated at 50°C for seven days was measured; the results are given in Table 19. It is seen that all inks show adequate stability.

### Print Test

The inks were printed as in Example 7. The jetting quality of inventive inks **31 - 34** was good over a wide range of firing frequencies, drive voltages, and dot spacings with good sustainability being observed. The inventive inks showed good print quality and adhesion to the substrate.

## Claims

1. An ink jet ink composition which comprises:-
(a) at least one pigment;
(b) at least one water-miscible organic solvent;
(c) at least one emulsion resin;
(d) at least one solution resin; and
(e) an aqueous carrier medium;
wherein the water-miscible organic solvent is 1,3-propane diol

2. An aqueous ink jet ink composition according to claim 1 which further comprises at least one surfactant.

3. An aqueous ink jet ink composition according to claim 1 which further comprises at least one dispersant for the pigment.

4. An aqueous ink jet ink composition according to claim 1 which further comprises at least one additional water-miscible organic solvent.

5. An aqueous ink jet ink composition according to claim 2 wherein the surfactant is dioctyl sulphosuccinate or salt thereof.

6. An aqueous ink jet ink composition according to claim 5 which further comprises at least one additional surfactant selected from a silicone surfactant, a fluorinated surfactant, and a polyethylene glycol alkyl ether surfactant.

7. A cyan ink jet ink composition comprising:
(a) at least one Phthalocyanine pigment;
(b) at least one emulsion resin;
(c) at least one solution resin;
(d) 1,3-propane diol;
(e) at least one fluorinated surfactant;
(f) a sulphosuccinate surfactant;
(g) at least one silicone surfactant; and
(h) an aqueous carrier medium.

8. A method for preparing an ink jet ink comprising:-
(a) dispersing at least one pigment and a dispersant for the pigment in an aqueous carrier medium; and
(b) diluting the dispersion thus produced with 1,3-propane diol, together with at least one emulsion resin, at least one solution resin, at least one additional water-miscible organic solvent, and water;
to produce an ink.

9. An ink set comprising two or more inks wherein at least one of the inks is formulated according to any of claims 1 - 8.

10. An ink jet printing process comprising:
i. taking an ink j et printer;
ii. loading the printer with at least one ink according to any of claims 1 - 8;
iii. printing the ink on to an ink jet printable medium; and
iv. drying the print using infra-red radiation.
